# EUROPEAN PATENT SPECIFICATION

(11) **EP 3 718 688 B1**
(45) Date of publication and mention of the grant of the patent: **22.05.2024**
(21) Application number: 18883504.5
(22) Date of filing: 31.05.2018
(51) Int. Cl.: B23Q 3/155, B23Q 3/157

(54) **MACHINE TOOL AND TOOL CHANGER, THE MACHINE TOOL COMPRISING A TOOL MAGAZINE MODULE**
WERKZEUGMASCHINE UND WERKZEUGWECHSLER, WOBEI DIE WERKZEUGMASCHINE EIN WERKZEUGMAGAZINMODUL UMFASST
MACHINE-OUTIL ET CHANGEUR D'OUTILS, LA MACHINE-OUTIL COMPRENANT UN MODULE DE MAGASIN D'OUTILS

(30) Priority: 30.11.2017 KR 20170163014
(43) Date of publication of application: 07.10.2020
(73) Proprietor: Hyundai Wia Corporation, Changwon-si, Gyeongsangnam-do 51533 (KR)
(72) Inventor: LEE, Dal Ho, Seoul 06691 (KR); KORFF, Dennis, 64584 Bibensheim (DE); NOWAK, Erik, 68165 Mannheim (DE); SCHNEIDER, Thomas, 64560 Riedstadt (DE)
(74) Representative: Viering, Jentschura & Partner mbB Patent- und Rechtsanwälte
(86) International application number: PCT/KR2018/006224
(87) International publication number: WO 2019/107683

(56) References cited:
- EP-A1- 0 132 599
- EP-A1- 0 517 652
- JP-A- S6 039 039
- KR-A- 20170 018 575
- KR-B1- 101 225 189
- KR-B1- 101 225 189
- US-A- 3 546 774
- US-A- 4 845 835
- US-A- 5 304 110

## Description

### Technical Field

The present invention relates to a machine tool and a tool changer, the machine tool comprising a tool magazine module.

### Background Art

Among machine tools, a machining center (MC) equipped with an automatic tool changer (ATC) is a kind of all-purpose machine tool capable of changing tools as needed and performing various kinds of machining with one machine, such as drilling, boring, screwing, and face-cutting. Machining is numerically controlled by a controller, and by inputting required design data, an automatic programming device makes an NC tape containing information about the sequence of machining, whereby machining is performed automatically.

The automatic tool changer includes a tool magazine loaded with a plurality of tools, and applies a method of moving a tool in the tool magazine to a new position and exchanging the tool with a tool in a main shaft using a tool-change system.

Tool magazines of a tool-receiving system are classified into drum magazines, chain magazines, disk magazines, and ring magazines depending on the structure thereof.

The chain-type tool magazine has an advantage of accommodating an increased number of tools, but has a disadvantage of requiring more time (i.e. chip-to-chip time) and installation space for changing the tools. In contrast, the disk-type tool magazine is limited with regard to the number of tools capable of being loaded therein, but has a benefit in that the time required to exchange tools is short.

In order for the tools to be changed in the automatic tool changer, a mechanism for moving and changing the tools between the tool magazine and the main shaft is required. Depending on requirements for work and the surrounding environment, the mechanism may be composed of rotational movement of the tool magazine, coupling through the movement of the main shaft (i.e. pickup type), a twin arm, or a robot, etc.

The mounting position of the automatic tool changer is a very important factor in the design of the machine tool because the position greatly affects the accessibility and movement of operators and the area required for installation of the machine tool. The mounting position may be the upper part of the main shaft or the upper part or the side part of the column. Alternately, in some cases, the automatic tool changer is embodied separately from the machine tool body. Like the mounting position of the automatic tool changer, the shape of the tool magazine is also influenced by the structure of the main body, the storage capacity of the tool magazine (the number of tools loaded therein), the installation space, and the like. Basically, it is possible for the tool magazine to have various shapes such as those of cylinders, cones, ellipses, and rectangles.

In other words, since the structure or mounting position of the automatic tool changer applied to each machine tool varies, the concept of the automatic tool changer may also vary. This means that for each machine tool, a standardized automatic tool-change system is not applied, but rather a specialized system for the machine tool should be provided. Due to this process, in fact, a lot of cost and effort are required to design and manufacture individual tool magazines.

The foregoing is intended merely to aid in the understanding of the background of the present invention, and is not intended to mean that the present invention falls within the purview of the related art that is already known to those skilled in the art.

The related art may be referred to KR10-1586501 (B).

EP 0 132 599 A1 discloses that a tool magazine with a tool-changing device comprises an actual magazine part with several disc-shaped tool carriers which are rotatably mounted on a shaft and accommodate peripherally arranged tools. In addition, the magazine part as a whole is vertically adjustable along the shaft. Provided between the individual tool carriers are drip plates which prevent contamination of the stored tools. Furthermore, a tool-changing device is provided with a column and a slide which is displaceably mounted on the column and carries a pivotably mounted transport arm. A gripping device is attached to the end of the transport arm. By pivoting the transport arm and if need be longitudinally displacing the slide and also turning the shaft and if need be vertically adjusting the magazine part, each tool contained in the magazine can be taken hold of by the gripping device and fed to a machine tool arranged in an adjacent position or can be taken from the machine tool and put back into the magazine.

US 3 546 774 A discloses a machine tool according to the preamble of appended claim 1.

### Disclosure

### Technical Problem

The present invention is disclosed to solve these problems, and an objective of the present invention is to provide a tool magazine module for a machine tool, wherein the structure of the disk-type tool magazine in tool magazines is modularized, so that various needs of users may be easily met and the cost of development and production of the tool magazine may be reduced, and wherein a standardized system capable of applying one tool magazine to various types of tool-change systems is applied, so that the efficiency of the disk magazine may be maximized through the compact structure and the short change time for tools.

### Technical Solution

In order to achieve the above objective of the present invention, there is provided a machine tool and a tool changer according to claim 1. Further embodiments are described in the dependent claims.

In one or more embodiments, the tools may be loaded vertically with respect to the magazine base, so that neighboring tools may be provided in close contact with each other.

In one or more embodiments, the magazine base may be provided in a ring shape having a cavity, the rotary shaft may be inserted into the cavity and be rotatably connected thereto, and the rotary shaft may be provided with a support part extending radially from the rotary shaft to the magazine base and connecting therebetween so as to support rotation of the magazine base.

In one or more embodiments, the magazine base may be provided with the rotary shaft for rotating the magazine base by insertion through the plurality of magazine bases, and the drive part may be provided with a drive shaft that is rotated when driving the drive part; wherein the drive shaft and the rotary shaft may be connected, so that the plurality of magazine bases may rotate simultaneously when driving the drive part.

In one or more embodiments, the frame may be provided with a transverse frame positioned between the magazine bases stacked and extending toward the rotary shaft in a direction crossing the rotary shaft, and the rotary shaft may be inserted through the transverse frame, so that the rotary shaft may be supported by the transverse frame when driving the drive part and be rotated while a center of rotation is maintained.

In one or more embodiments, a bearing part may be provided at a position between the rotary shaft and the transverse frame to enable rotation of the rotary shaft inserted into the transverse frame.

In one or more embodiments, a support plate may be provided at a position below the frame, the support plate may be provided to maintain the center of rotation when rotating the drive part, and the drive part may be vertically connected to the rotary shaft provided through the plurality of magazine bases; and wherein, when more than a predetermined number of magazine bases is stacked, another rotary shaft may be provided to penetrate vertically through and be connected to the transverse frame to maintain the center of rotation, so that, when driving the drive part, the plurality of magazine bases in a vertically stacked state may be rotated while maintaining the center of rotation.

In one or more embodiments, at least half of each magazine base may be inserted into the machine tool and coupled thereto.

In one or more embodiments, a base plate may be provided at a position below the magazine bases to collect leftover cutting oil that drops when changing the tools.

### Advantageous Effects

According to a machine tool and a tool changer having the structure described above, there is a benefit in that the tool magazine module may be applied without any design change. In particular, in the case of the twin-arm type, simply by increasing or decreasing the number of magazine bases, there is a benefit of improving the limited tool capacity, which is a disadvantage of the conventional disk magazine. Therefore, the diversity of the product may be maintained while reducing the development and production cost of the magazine base. Also, the tool magazine module has a benefit in that it is capable of being easily applied to any machine tool merely by changing a stacked number thereof depending on the size and shape of the machine tool.

### Description of Drawings

FIG. 1 is a view illustrating a tool magazine module of a machine tool according to the present invention.
FIG. 2 is a side view of FIG. 1.
FIG. 3 is a view illustrating a background example of a tool magazine module of a machine tool not falling under the scope of the appended claims.
FIG. 4 is a side view of FIG. 3.

### Mode for Invention

Hereinafter, a tool magazine module of a machine tool according to a preferred exemplary embodiment of the present invention will be described with reference to the accompanying drawings.

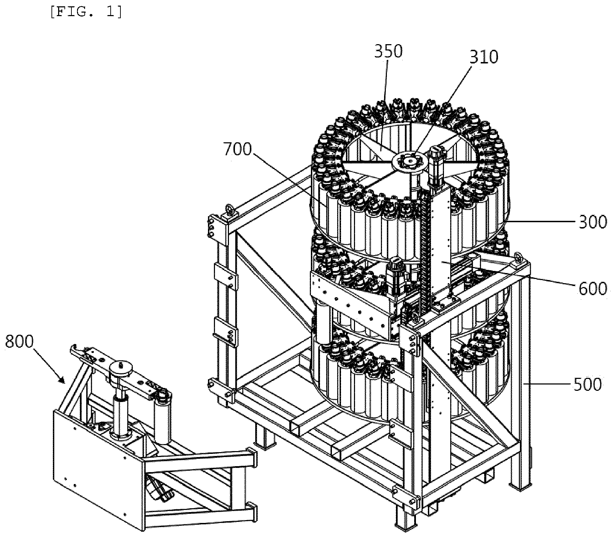

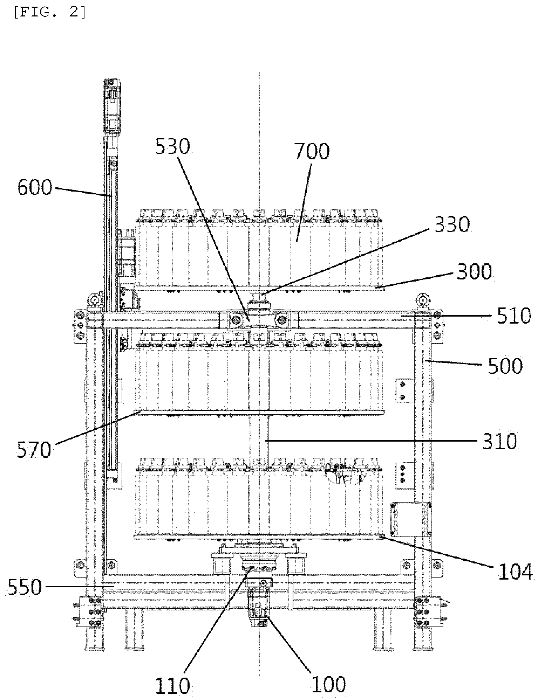

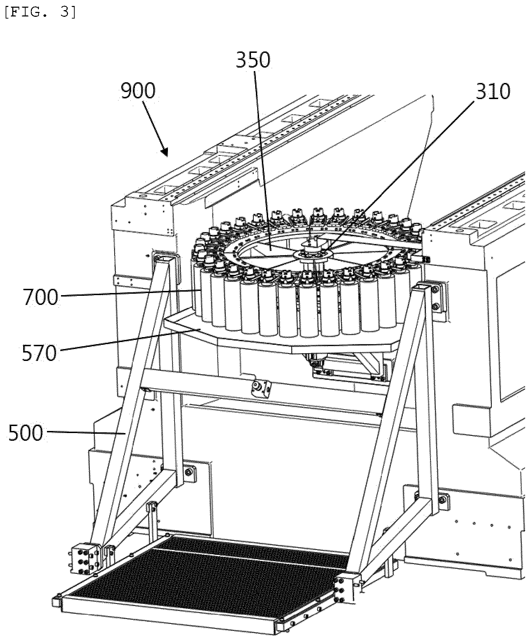

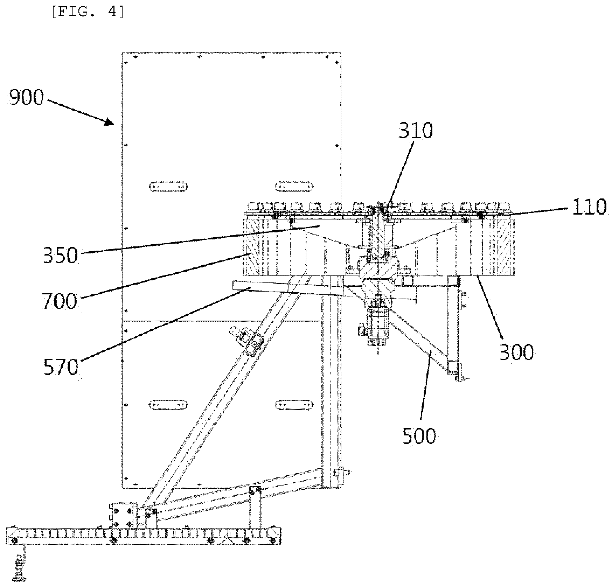

FIG. 1 is a view illustrating a tool magazine module of a machine tool according to the present invention, FIG. 2 is a side view of FIG. 1, FIG. 3 is a view illustrating a background example of a tool magazine module of a machine tool, and FIG. 4 is a side view of FIG. 3.

In the present invention, there is described a twin-arm-type automatic tool changer as an example. Particularly, in the present invention, while the twin-arm type is used for the description, the main concept is that a plurality of tool magazines is stacked and used. Therefore, the description will be illustrated with reference to the drawings and explained with an emphasis on that aspect.

As shown in FIGS 1 and 2, according to the present invention, the tool magazine module of the machine tool includes: a rotary shaft 310, rotating by being connected to a drive part 100 providing a rotational force; a plurality of magazine bases 300 having a disk shape and being provided with a central part connected to the rotary shaft 310 to be rotated, the plurality of magazine bases loaded with a tool 700 along a rim, and mounted by being stacked on the rotary shaft 310; and a transfer system 600 enabling the tools 700 to be interchanged between any magazine base 300 and a tool changer 800 by moving in an up-and-down direction and a forward-and-backward direction on one side of the magazine base 300.

The magazine base 300 of the present invention has a disk shape, the central part of which is connected to the rotary shaft 310 and rotated. The rotary shaft 310 is connected to a drive part 100 that provides a rotational force and rotated, and the details will be described later. The drive part 100 may be a conventional motor. In particular, the magazine base 300 is provided in a ring shape having a cavity therein, and the rotary shaft 310 is inserted into the cavity and rotatably connected thereto. The rotary shaft 310 is provided with a support part 350 extending radially from the rotary shaft 310 to the magazine base 300 and connecting therebetween, so that rotation is supported when the magazine base 300 is rotated, and thus the rotation may be more stably performed.

When the tool 700 is loaded on the magazine base 300, the tool 700 is loaded along a rim of the magazine base 300, and neighboring tools 700 are loaded close to each other by being loaded vertically. Therefore, unlike the radially loaded tools in the conventional disk-shaped magazine base, the tools are loaded vertically, thereby having a benefit of making it possible to load a larger number of tools. In addition, the magazine base 300 to which such a tool 700 is loaded is composed in the same form, and a plurality of magazine bases is stacked, and thus a larger number of tools 700 may be loaded. In addition, the magazine base 300 has no restriction on the number of layers thereof, thereby having a benefit in that magazine bases 300 may be easily added to the stack or removed therefrom without need for identifying the location thereof.

In particular, the magazine base 300 is rotated when driving the drive part 100, wherein the magazine base 300 is provided with a rotary shaft 310 that is inserted through the plurality of magazine bases 300 so as to rotate the magazine bases 300, wherein the drive unit 100 is provided with the drive shaft 110, which is rotated when the drive part 100 is driven, and wherein the drive shaft 110 and the rotary shaft 310 are connected, whereby the plurality of magazine bases 300 may be simultaneously rotated when the drive part 100 is driven. In addition, since the base plate 570 is provided at a position below the magazine base 300 to collect leftover cutting oil that drops when changing the tools 700, the oil falling from the upper-layer magazine base 300 does not affect the lower-layer magazine base 300, making it possible to maintain the tool 700 in an optimal state, free from contamination by foreign matter.

In the magazine base 300, by being extended in an up-and-down direction in the outer side or the periphery of the magazine base 300, a frame 500 is provided, enclosing and supporting the magazine bases 300 stacked in a plurality thereof. That is, the plurality of magazine bases 300 is stacked and installed on the frame 500. The frame 500 may be provided by connecting a plurality of bar-shaped links to each other. Outside the frame 500, an independently configured tool changer 800 is positioned, and the machine tool 900 is positioned outside the tool changer 800, wherein both the tool changer 800 and the machine tool 900 are connected to the magazine base 300 mounted on the frame 500 so that the tool 700 provided in the magazine base 300 may be supplied to the machine tool 900 by the tool changer 800. At this time, at least half of the magazine base 300 is inserted into and coupled to the inside of the machine tool 900, and thus there is a benefit in that it becomes easy to change the tool 700 in the tool changer 800. In addition, in the production process, there is an advantage in that the tool magazine module, the machine tool 900, and the tool changer 800 may be assembled independently of each other.

A support plate 550 is provided at a position below the frame 500, and the support plate 550 is provided to maintain the center of rotation when the drive part 100 rotates. The drive shaft 110 of the drive part 100 is vertically connected to the rotary shaft 310 provided through the plurality of magazine bases 300. Accordingly, when rotating the drive part 100, the drive shaft 110 is rotated, and the rotary shaft 310, which is integrally provided with the drive shaft 110, is also rotated, and thus the magazine base 300 is rotated.

The transfer system 600 is provided at a position on one side of the frame 500 and is moved in an up-and-down direction and a forward-and-backward direction on one side of the magazine base 300, so that the tool 700 may be interchanged between any magazine base 300 and a tool changer 800.

In FIGS. 1 and 2, illustrating the present invention, the magazine base 300 is illustrated as an example that is stacked in three layers. In this case, it may be difficult to rotate the magazine base while maintaining the center of rotation and the vertical state of both the drive shaft 110 of the drive part 100 and the rotary shaft 310 provided so as to be vertically connected to the drive shaft 110. Therefore, in the present invention, a transverse frame 510 is provided at a position between the two magazine bases 300 mounted from below the frame 500 and the other magazine base 300 so as to support the rotary shaft 310. The transverse frame 510 extends toward the rotary shaft 310 in a direction crossing the rotary shaft 310 from the frame 500 provided in an up-and-down direction. Another rotary shaft 330 is inserted through the extended transverse frame 510. At this time, a bearing part 530 is provided at a position between the rotary shaft 330 and the transverse frame 510, thereby enabling the rotary shaft 330 inserted into the transverse frame 510 to be rotated.

Accordingly, the drive shaft 110 is rotated when driving the drive part 100, and the rotary shaft 310 is rotated according to the rotation of the drive shaft 110, wherein, when a predetermined number of magazine bases are to be stacked, another rotary shaft 330 is provided by vertically penetrating and being connected to the transverse frame 510 so as to maintain the center of rotation, so that when driving the drive part 100, the plurality of magazine bases 300 is rotated while maintaining the center of rotation in a vertically stacked state. Therefore, even when magazine bases 300 are stacked on the frame 500 one after another, the transverse frame 510 is provided at the positions in between the intervals so that the center of rotation (in short, the center) formed by the drive shaft 110 of the drive part 100 is maintained while the rotary shaft 310 and 330 is supported, whereby the magazine base 300 is able to rotate more stably.

FIGS. 3 and 4 illustrate a background example where the magazine base 300 having a pickup-type tool change method is provided. As in the invention, the tool 700 is loaded on the magazine base 300, and the frame 500 is provided at a position outside the magazine base 300. However, in this example, the magazine base 300 on which the tool 700 is loaded is composed of a single layer so that about half of the magazine base 300 is inserted into the machine tool 900. In addition, the magazine base 300 is coupled to the frame 500 and is directly bound to the machine bed 400 of the machine tool 900, thereby composing a pickup-type automatic tool-change system. In the case of such a pickup type, a base plate 570 is provided on one side of the frame 500 to receive cutting oil or foreign matter.

Therefore, according to the machine tool of the present invention as described above, the tool magazine module may be applied without an additional design change. In particular, in the case of the twin-arm type, simply by increasing or decreasing the number of magazine bases, the twin-arm type has a benefit of increasing the limited tool capacity, which is a disadvantage of the conventional disk magazine. Therefore, the diversity of the product may be maintained while reducing the development and production cost of the magazine base, and the tool magazine module has a benefit in that it is capable of being easily applied to any machine tool merely by changing a stacked number thereof according to the size and shape of the machine tool.

As described above, the present invention has been described with reference to particular exemplary embodiments thereof.

### <Description of the Reference Numerals in the Drawings>

| | | | |
|---|---|---|---|
| 100: | drive part | 110: | drive shaft |
| 300: | magazine base | 310, 330: | rotary shaft |
| 350: | support part | 400: | machine bed |
| 500: | frame | 510: | transverse frame |
| 530: | bearing part | 550: | support plate |
| 570: | base plate | 600: | transfer system |
| 700: | tool | 800: | tool changer |
| 900: | machine tool | | |

## Claims

1. A machine tool (900) and a tool changer (800), the machine tool (900) comprising a tool magazine module which comprises:
a rotary shaft (310) rotating by being connected to a drive part (100) providing a rotational force;
a plurality of magazine bases (300) having a disk shape and being provided with a central part connected to the rotary shaft (310) to be rotated, the plurality of magazine bases (300) loaded with tools (700) along a rim thereof, and mounted by being stacked on the rotary shaft (310); and
a transfer system (600) enabling the tools (700) to be interchanged between any magazine base (300) and the tool changer (800) by moving in an up-and-down direction and a forward-and-backward direction on one side of the magazine base (300),
**characterized in that**:
the tool magazine module is provided with a frame (500) that wraps and supports the magazine bases (300), stacked in a plurality thereof, and extending in an up-and-down direction from an outer side or periphery of the magazine bases (300), wherein the transfer system (600) is disposed in an inner side of the frame (500) between the magazine base (300) and the frame (500), and
the tool changer (800) is positioned on an outer side of the frame (500), and the machine tool (900) is positioned on an outer side of the tool changer (800), wherein both the tool changer (800) and the machine tool (900) are mounted on the frame (500) and connected to the magazine bases (300).

2. The machine tool (900) and the tool changer (800) of claim 1, wherein the tools (700) are loaded vertically with respect to the magazine base (300), so that neighboring tools (700) are provided in close contact with each other.

3. The machine tool (900) and the tool changer (800) of claim 1, wherein the magazine bases (300) are provided in a ring shape having a cavity, the rotary shaft (310) is inserted into the cavity and is rotatably connected thereto, and the rotary shaft (310) is provided with a support part (350) extending radially from the rotary shaft (310) to the magazine base (300) and connecting therebetween so as to support rotation of the magazine bases (300).

4. The machine tool (900) and the tool changer (800) of claim 1, wherein the magazine bases (300) are provided with the rotary shaft (310) for rotating the magazine bases (300) by insertion through the plurality of magazine bases (300), and the drive part (100) is provided with a drive shaft (110) that is rotated when driving the drive part (100); and wherein the drive shaft (110) and the rotary shaft (310) are connected, so that the plurality of magazine bases (300) rotates simultaneously when driving the drive part (100).

5. The machine tool (900) and the tool changer (800) of claim 1, wherein the frame (500) is provided with a transverse frame (510) positioned between the magazine bases (300) stacked and extending toward the rotary shaft (310) in a direction crossing the rotary shaft (310), and the rotary shaft (310) is inserted through the transverse frame (510), so that the rotary shaft (310) is supported by the transverse frame (510) when driving the drive part (100) and is rotated while a center of rotation is maintained.

6. The machine tool (900) and the tool changer (800) of claim 5, wherein a bearing part (530) is provided at a position between the rotary shaft (310) and the transverse frame (510) to enable rotation of the rotary shaft (310) inserted into the transverse frame (510).

7. The machine tool (900) and the tool changer (800) of claim 5, wherein a support plate (550) is provided at a position below the frame (500), the support plate (550) is provided to maintain the center of rotation when rotating the drive part (100), and the drive part (100) is vertically connected to the rotary shaft (310) provided through the plurality of magazine bases (300); and wherein, when more than a predetermined number of magazine bases (300) is stacked, another rotary shaft (330) is provided to penetrate vertically through and be connected to the transverse frame (510) to maintain the center of rotation, so that, when driving the drive part (100), the plurality of magazine bases (300) in a vertically stacked state is rotated while maintaining the center of rotation.

8. The machine tool (900) and the tool changer (800) of claim 1, wherein at least half of each magazine base (300) is inserted into the machine tool (900) and coupled thereto.

9. The machine tool (900) and the tool changer (800) of claim 1, wherein a base plate (570) is provided at a position below the magazine bases (300) to collect leftover cutting oil that drops when changing the tools.

## Patentansprüche

1. Werkzeugmaschine (900) und Werkzeugwechsler (800), wobei die Werkzeugmaschine (900) ein Werkzeugmagazinmodul aufweist, aufweisend:
eine Drehwelle (310), die sich dreht, indem sie mit einem Antriebsteil (100) verbunden ist, der eine Drehkraft bereitstellt,
eine Mehrzahl von Magazinsockeln (300), die eine Scheibenform haben und mit einem zentralen Teil vorgesehen sind, der mit der Drehwelle (310) verbunden ist, um gedreht zu werden, wobei die Mehrzahl von Magazinsockeln (300) entlang eines Randes davon mit Werkzeugen (700) beladen und durch Stapeln auf der Drehwelle (310) montiert ist, und
ein Transfersystem (600), das es ermöglicht, die Werkzeuge (700) zwischen einem beliebigen Magazinsockel (300) und dem Werkzeugwechsler (800) auszutauschen, durch Bewegen in einer Auf- und Abwärtsrichtung und einer Vorwärts- und Rückwärtsrichtung auf einer Seite des Magazinsockels (300),
**dadurch gekennzeichnet, dass**:
das Werkzeugmagazinmodul mit einem Rahmen (500) vorgesehen ist, der die Magazinsockel (300), die in einer Mehrzahl davon gestapelt sind, umhüllt und abstützt und sich in einer Auf- und Abwärtsrichtung von einer Außenseite oder einem Umfang der Magazinsockel (300) erstreckt, wobei das Transfersystem (600) in einer Innenseite des Rahmens (500) zwischen dem Magazinsockel (300) und dem Rahmen (500) angeordnet ist, und
der Werkzeugwechsler (800) an einer Außenseite des Rahmens (500) angeordnet ist und die Werkzeugmaschine (900) an einer Außenseite des Werkzeugwechslers (800) angeordnet ist, wobei sowohl der Werkzeugwechsler (800) als auch die Werkzeugmaschine (900) an dem Rahmen (500) montiert und mit den Magazinsockeln (300) verbunden sind.

2. Werkzeugmaschine (900) und Werkzeugwechsler (800) gemäß Anspruch 1, wobei die Werkzeuge (700) in Bezug auf den Magazinsockel (300) vertikal geladen sind, so dass benachbarte Werkzeuge (700) in engem Kontakt zueinander bereitgestellt sind.

3. Werkzeugmaschine (900) und Werkzeugwechsler (800) gemäß Anspruch 1, wobei die Magazinsockel (300) in einer Ringform, die einen Hohlraum hat, bereitgestellt sind, die Drehwelle (310) in den Hohlraum eingesetzt und drehbar damit verbunden ist, und die Drehwelle (310) mit einem Stützteil (350) bereitgestellt ist, der sich radial von der Drehwelle (310) zu dem Magazinsockel (300) erstreckt und dazwischen verbindet, um eine Drehung der Magazinsockel (300) zu unterstützen.

4. Werkzeugmaschine (900) und Werkzeugwechsler (800) gemäß Anspruch 1, wobei die Magazinsockel (300) mit der Drehwelle (310) zum Drehen der Magazinsockel (300) durch Einsetzen durch die Mehrzahl von Magazinsockeln (300) bereitgestellt sind, und der Antriebsteil (100) mit einer Antriebswelle (110) vorgesehen ist, die beim Antreiben des Antriebsteils (100) gedreht wird, und wobei die Antriebswelle (110) und die Drehwelle (310) verbunden sind, so dass sich die Mehrzahl von Magazinsockeln (300) beim Antreiben des Antriebsteils (100) gleichzeitig dreht.

5. Werkzeugmaschine (900) und Werkzeugwechsler (800) gemäß Anspruch 1, wobei der Rahmen (500) mit einem Querrahmen (510) versehen ist, der zwischen den Magazinsockeln (300) positioniert ist, die gestapelt sind, und sich in Richtung zu der Drehwelle (310) in einer Richtung erstreckt, die die Drehwelle (310) kreuzt, und die Drehwelle (310) durch den Querrahmen (510) hindurch eingesetzt ist, so dass die Drehwelle (310) durch den Querrahmen (510) abgestützt ist, wenn der Antriebsteil (100) angetrieben wird, und gedreht wird, während ein Drehzentrum aufrechterhalten wird.

6. Werkzeugmaschine (900) und Werkzeugwechsler (800) gemäß Anspruch 5, wobei ein Lagerteil (530) an einer Position zwischen der Drehwelle (310) und dem Querrahmen (510) vorgesehen ist, um ein Drehen der in den Querrahmen (510) eingesetzten Drehwelle (310) zu ermöglichen.

7. Werkzeugmaschine (900) und Werkzeugwechsler (800) gemäß Anspruch 5, wobei eine Stützplatte (550) an einer Position unterhalb des Rahmens (500) vorgesehen ist, die Stützplatte (550) vorgesehen ist, um das Drehzentrum aufrechtzuerhalten, wenn der Antriebsteil (100) gedreht wird, und der Antriebsteil (100) vertikal mit der Drehwelle (310) verbunden ist, die durch die Mehrzahl von Magazinsockeln (300) bereitgestellt ist, und wobei, wenn mehr als eine vorbestimmte Anzahl von Magazinsockeln (300) gestapelt ist, eine weitere Drehwelle (330) vorgesehen ist, um vertikal durch den Querrahmen (510) hindurchzutreten und mit diesem verbunden zu sein, um das Drehzentrum aufrechtzuerhalten, so dass beim Antreiben des Antriebsteils (100) die Mehrzahl von Magazinsockeln (300) in einem vertikal gestapelten Zustand gedreht wird, während das Drehzentrum aufrechterhalten wird.

8. Werkzeugmaschine (900) und Werkzeugwechsler (800) gemäß Anspruch 1, wobei zumindest eine Hälfte von jedem Magazinsockel (300) in die Werkzeugmaschine (900) eingesetzt ist und damit verbunden ist.

9. Werkzeugmaschine (900) und Werkzeugwechsler (800) gemäß Anspruch 1, wobei eine Basisplatte (570) an einer Position unterhalb der Magazinsockel (300) vorgesehen ist, um Schneidölreste aufzufangen, die beim Wechseln der Werkzeuge abtropfen.

## Revendications

1. Machine-outil (900) et changeur d'outils (800), la machine-outil (900) comprenant un module de magasin d'outils, comprenant :
un arbre rotatif (310) qui tourne en étant connecté à une partie d'entraînement (100) fournissant une force de rotation ;
une pluralité de bases de magasin (300) ayant une forme de disque et pourvues d'une partie centrale connectée à l'arbre rotatif (310) pour tourner, la pluralité de bases de magasin (300) étant chargées d'outils (700) le long d'un bord de celles-ci, et montées en étant empilées sur l'arbre rotatif (310) ; et
un système de transfert (600) permettant d'échanger les outils (700) entre n'importe quelle base de magasin (300) et le changeur d'outils (800) en se déplaçant dans une direction de haut en bas et une direction d'avant en arrière sur un côté de la base de magasin (300),
**caractérisés en ce que** :
le module de magasin d'outils est pourvu d'un cadre (500) qui enveloppe et supporte les bases de magasin (300), empilées en une pluralité de celles-ci, et s'étendant dans une direction de haut en bas à partir d'un côté extérieur ou d'une périphérie des bases de magasin (300), le système de transfert (600) étant disposé dans un côté intérieur du cadre (500) entre la base de magasin (300) et le cadre (500), et
le changeur d'outils (800) est positionné sur un côté extérieur du cadre (500), et la machine-outil (900) est positionnée sur un côté extérieur du changeur d'outils (800), le changeur d'outils (800) et la machine-outil (900) étant tous les deux montés sur le cadre (500) et connectés aux bases de magasin (300).

2. Machine-outil (900) et changeur d'outils (800) selon la revendication 1, dans lesquels les outils (700) sont chargés verticalement par rapport à la base de magasin (300), de sorte que des outils voisins (700) sont prévus en contact étroit les uns avec les autres.

3. Machine-outil (900) et changeur d'outils (800) selon la revendication 1, dans lesquels les bases de magasin (300) sont prévues en une forme d'anneau ayant une cavité, l'arbre rotatif (310) est inséré dans la cavité et y est connecté de manière rotative, et l'arbre rotatif (310) est pourvu d'une partie de support (350) s'étendant radialement de l'arbre rotatif (310) à la base de magasin (300) et connectant entre ceux-ci de manière à supporter une rotation des bases de magasin (300).

4. Machine-outil (900) et changeur d'outils (800) selon la revendication 1, dans lesquels les bases de magasin (300) sont pourvues de l'arbre rotatif (310) pour faire tourner les bases de magasin (300) par insertion à travers la pluralité de bases de magasin (300), et la partie d'entraînement (100) est pourvue d'un arbre d'entraînement (110) qui est tourné lors d'un entraînement de la partie d'entraînement (100) ; et dans lesquels l'arbre d'entraînement (110) et l'arbre rotatif (310) sont connectés, de sorte que la pluralité de bases de magasin (300) tournent simultanément lors d'un entraînement de la partie d'entraînement (100).

5. Machine-outil (900) et changeur d'outils (800) selon la revendication 1, dans lesquels le cadre (500) est pourvu d'un cadre transversal (510) positionné entre les bases de magasin (300) empilées et s'étendant vers l'arbre rotatif (310) dans une direction traversant l'arbre rotatif (310), et l'arbre rotatif (310) est inséré à travers le cadre transversal (510), de sorte que l'arbre rotatif (310) est supporté par le cadre transversal (510) lors d'un entraînement de la partie d'entraînement (100) et est tourné tout en maintenant un centre de rotation.

6. Machine-outil (900) et changeur d'outils (800) selon la revendication 5, dans lesquels une partie de palier (530) est prévue à une position entre l'arbre rotatif (310) et le cadre transversal (510) pour permettre une rotation de l'arbre rotatif (310) inséré dans le cadre transversal (510).

7. Machine-outil (900) et changeur d'outils (800) selon la revendication 5, dans lesquels une plaque de support (550) est prévue à une position en dessous du cadre (500), la plaque de support (550) est prévue pour maintenir le centre de rotation lors d'une rotation de la partie d'entraînement (100), et la partie d'entraînement (100) est connectée verticalement à l'arbre rotatif (310) fourni à travers la pluralité de bases de magasin (300) ; et dans lesquels, lorsque plus d'un nombre prédéterminé de bases de magasin (300) est empilé, un autre arbre rotatif (330) est prévu pour pénétrer verticalement à travers et être connecté au cadre transversal (510) pour maintenir le centre de rotation, de sorte que, lors d'un entraînement de la partie d'entraînement (100), la pluralité de bases de magasin (300) dans un état d'empilement vertical sont tournées tout en maintenant le centre de rotation.

8. Machine-outil (900) et changeur d'outils (800) selon la revendication 1, dans lesquels au moins une moitié de chaque base de magasin (300) est insérée dans la machine-outil (900) et couplée à celle-ci.

9. Machine-outil (900) et changeur d'outils (800) selon la revendication 1, dans lesquels une plaque de base (570) est prévue à une position en dessous des bases de magasin (300) pour recueillir des restes d'huile de coupe qui gouttent lors d'un changement d'outils.
